# EUROPEAN PATENT SPECIFICATION

(11) **EP 3 164 785 B1**
(45) Date of publication and mention of the grant of the patent: **16.05.2018**
(21) Application number: 15730914.7
(22) Date of filing: 02.06.2015
(51) Int. Cl.: G06F 3/01, G06F 3/0482, G06F 3/0483

(54) **WEARABLE DEVICE USER INTERFACE CONTROL**
BENUTZERSCHNITTSTELLENSTEUERUNG EINER WEARABLE-VORRICHTUNG
COMMANDE D'INTERFACE UTILISATEUR DE DISPOSITIF VESTIMENTAIRE

(30) Priority: 01.07.2014 US 201414321730
(43) Date of publication of application: 10.05.2017
(60) Divisional application: 18153982.6
(73) Proprietor: Google LLC, Mountain View, CA 94043 (US)
(72) Inventor: FAABORG, Alexander, Mountain View, California 94043 (US); CONNOLLY, Emmet, Mountain View, California 94043 (US)
(74) Representative: Boult Wade Tennant
(86) International application number: PCT/US2015/033787
(87) International publication number: WO 2016/003574

(56) References cited:
- US-A1- 2014 160 078
- US-A1- 2014 176 335

## Description

### BACKGROUND

Some wearable computing devices (e.g., smart watches, activity trackers, heads-up display devices, etc.) output graphical content for display. For example, a wearable computing device may present a graphical user interface (GUI) including one or more graphical elements that contain information. As a user interacts with a GUI that contains visual indications of content, a wearable computing device may receive input (e.g., speech input, touch input, etc.). However, when interacting with the GUI, it may be difficult for a user to provide speech input, touch input, or other conventional types of input that may require a user to focus and/or exhibit precise control. For example, the user may be immersed in activity (e.g., having a face-to-face conversation, riding a bicycle, etc.) or attending an event (e.g., a concert, a movie, a meeting, an educational class, etc.) that prevents a user from speaking voice-commands into a microphone or providing specific touch inputs at a screen.

US 2014/0160078 discloses a mobile device that includes a body of a bangle type configured to be worn on a user body, a display mounted in the body, a motion sensor configured to detect a motion, a storage configured to store control information which is differently set according to a motion state, and, when a motion is detected by the motion sensor, a controller configured to change a screen of the display according to control information corresponding to the detected motion. US 2014/0176335 discloses a biometric monitoring device with a display that, in response to receiving page advance requests from a user, may advance through a plurality of different data display pages.

### SUMMARY

The invention is set out in the appended set of claims.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating an example wearable computing device that displays a visual stack of content cards in different arrangements, in accordance with one or more aspects of the present disclosure.
FIG. 2 is a block diagram illustrating an example wearable computing device that is configured to display different arrangements of a visual stack of content cards, in accordance with one or more aspects of the present disclosure.
FIGS. 3A through 4C are conceptual diagrams illustrating example movements of an example wearable computing device, in accordance with one or more aspects of the present disclosure.
FIG. 5 is a conceptual diagram illustrating example content cards of a visual stack, in accordance with one or more aspects of the present disclosure.
FIG. 6 is a conceptual block diagram illustrating an example computing device that outputs graphical content for display at a remote device, in accordance with one or more techniques of the present disclosure.
FIG. 7 is a flowchart illustrating example operations of an example wearable computing device that is configured to display a visual stack of content cards in different arrangements, in accordance with one or more aspects of the present disclosure.

### DETAILED DESCRIPTION

In general, techniques of this disclosure may enable a wearable computing device (e.g., smart watches, activity trackers, heads-up display devices, etc.) to detect movement associated with the wearable computing device, and, in response to detecting a particular movement that approximates a predefined movement, output an altered presentation and/or arrangement of a visual stack of content cards displayed at a display device. For example, a wearable computing device (referred to herein simply as a "wearable") may output a graphical user interface (GUI) for presentation at a display (e.g., a display of the wearable).

The GUI may include a visual stack of content cards and each of the content cards may contain information (e.g., text, graphics, etc.) that is viewable at the display. For example, similar to a stack of playing cards, a visual stack of "content cards" may have several graphical elements overlaid on top of the other. In some implementations, only information associated with content card atop the visual stack may be visible at a given time, while information associated with the other content cards from the visual stack may be visually obscured "behind" the top content card, such that it is not visible at the display at the given time.

Rather than requiring the user to provide a voice-command (e.g., by speaking the word "next" into a microphone of the wearable) or provide touch inputs (e.g., by tapping a location of a screen of the wearable) to instruct the wearable to update the GUI such that information associated with one or more of the other content cards is visible to the user, the wearable may enable the user to provide specific movements to cause the wearable to update the GUI, thereby enabling the user [[ot]] to navigate through the content cards of the visual stack.

A motion sensor of the wearable may detect movement associated with the wearable itself (e.g., as the user moves and twists the body part of piece of clothing that the wearable is attached to). After detecting movement that corresponds to a predefined movement associated with a particular arrangement for presenting the visual stack, the wearable may select a particular updated arrangement of cards from the visual stack, and then output the updated arrangement of the visual stack for display. For example, if the user causes the wearable to move with a specific change in direction, speed, rotation, etc., over a certain period of time (e.g., one second) the wearable may cause the display to replace, at the display, the top content card with a next content card in the visual stack. In some implementations, if the user causes the wearable to move with a different movement, the wearable may instead "fan-out" the visual stack by outputting, for display, at least a portion of the information from each of the other content cards "beneath" the information of a content card currently displayed "atop" the stack.

In this manner, techniques of this disclosure may enable a user to more quickly and easily view different content cards in a visual stack by providing certain, easy-to-perform movements that may require less user focus or control than other types of inputs. Unlike other types of wearable devices that rely primarily on speech, touch, or other types of input, a wearable configured according to techniques of this disclosure can enable a user to more quickly and intuitively navigate through a visual stack of content cards, even if the user is immersed in other activities. For example, even if a user is using his or her hands to cook, is standing in line at an airport, or is otherwise performing an activity that makes providing voice commands or touch inputs difficult, the user can easily navigate through a visual stack of content cards displayed at a wearable device simply by moving him or herself (and thus the wearable) according to a predetermined movement pattern.

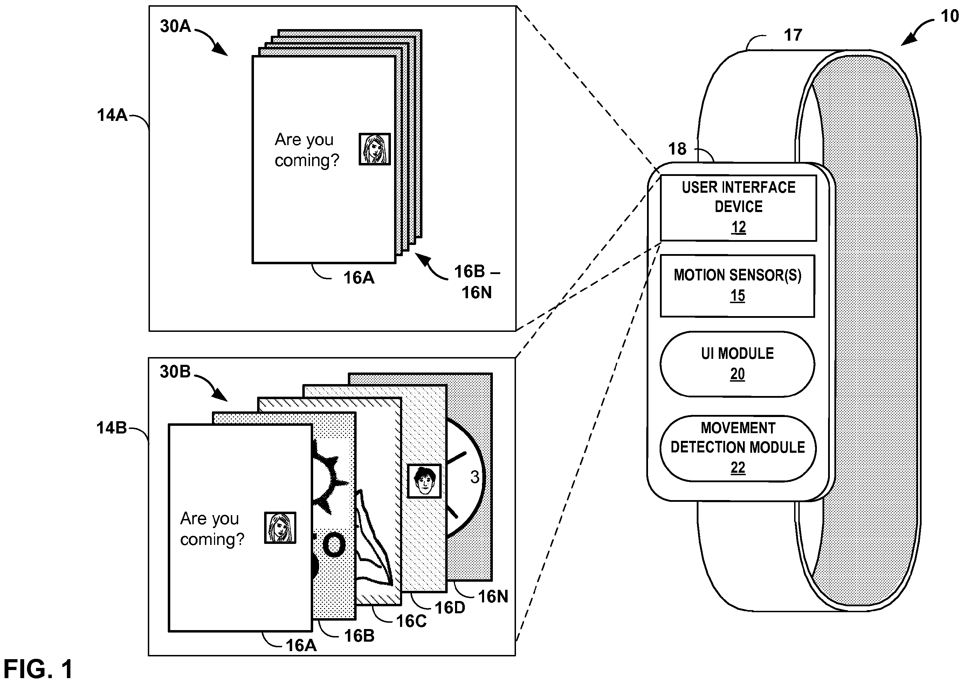

FIG. 1 is a conceptual diagram illustrating wearable computing device 10 (referred to simply as "wearable 10") that displays a visual stack of content cards in different arrangements, in accordance with one or more aspects of the present disclosure. In the example of FIG. 1, wearable 10 is a computerized watch. However in other examples, wearable computing device is a computerized fitness band/tracker, computerized eyewear, computerized headwear, a computerized glove, etc. In other examples, wearable 10 may be any type of mobile computing device that can attach to and be worn on a person's body or clothing. For example, any tablet computer, mobile phone, personal digital assistant (PDA), game system or controller, media player, e-book reader, television platform, navigation system, remote control, or other mobile computing device that can easily be moved by a user in accordance with the below described techniques.

As shown in FIG. 1, in some examples, wearable 10 may include attachment device 17 and electrical housing 18. Housing 18 of computing device 10 includes a physical portion of a wearable computing device that houses a combination of hardware, software, firmware, and/or other electrical components of wearable 10. For example, FIG. 1 shows that within housing 18, wearable 10 may include a user interface device (UID) 12, motion sensor(s) 15, user interface (UI) module 20, and movement detection module 22.

Attachment device 17 may include a physical portion of a wearable computing device that comes in contact with a body (e.g., tissue, muscle, skin, hair, clothing, etc.) of a user when the user is wearing wearable 10. For example, in cases where wearable 10 is a watch, attachment device 17 may be a watch band that fits around a user's wrist and comes in contact with the skin of the user. In examples where wearable 10 is eyewear or headwear, attachment device 17 may be a portion of the frame of the eyewear or headwear that fits around a user's head, and when wearable 10 is a glove, attachment device 17 may be the material of the glove that conforms to the fingers and hand of the user. In some examples, wearable 10 can be grasped and held from housing 18 and/or attachment device 17.

Modules 20 and 22 may perform operations described herein using software, hardware, firmware, or a mixture of hardware, software, and/or firmware residing in and/or executing at wearable 10. Wearable 10 may execute modules 20 and 22 with one or more processors located within housing 18. In some examples, wearable 10 may execute modules 20 and 22 as one or more virtual machines executing on underlying hardware of wearable 10 located within housing 18. Modules 20 and 22 may execute as one or more services or components of operating systems or computing platforms of wearable 10. Modules 20 and 22 may execute as one or more executable programs at application layers of computing platforms of wearable 10. In other examples, UID 12, motion sensors 15, and/or modules 20 and 22 may be arranged remotely to housing 18 and be remotely accessible to wearable 10, for instance, via interaction by wearable 10 with one or more network services operating at a network or in a network cloud.

Motion sensors 15 represent one or more motion sensor or input device configured to detect indications of movement (e.g., data representing movement) associated with wearable 10. Examples of motion sensors 15 include accelerometers, speed sensors, gyroscopes, tilt sensors, barometers, proximity sensors, ambient light sensors, cameras, microphones, or any and all other types of input devices or sensors that can generate data from which wearable device 10 can determine movement.

Motions sensors 15 may generate "raw" motion data when a user of wearable 10 causes attachment device 17 and/or housing 18 to move. For example, as a user twists his or her wrist or moves his or her arm while wearing attachment device 17, motion sensors 15 may output raw motion data (e.g., indicating an amount of movement and a time at which the movement was detected) being generated during the movement to movement detection module 22. The motion data may indicate one or more characteristics of movement including at least one of an acceleration, a level of tilt, a direction, a speed, a degree of rotation, a degree of orientation, or a level of luminance.

Movement detection module 22 obtains motion sensor data generated by motion sensors 15 and processes the motion sensor data to identify or otherwise determine what specific types and characteristics of movement are being detected by motion sensors 15. Said differently, movement detection module 22 determines, based on motion sensor data, when, how, and in what direction that wearable 10 is moving. Movement detection module 22 may provide, based on motion data obtained from motion sensors 15, an indication (e.g., data) of when wearable 10 is detected moving in a recognizable, predefined, pattern or profile of movement. For example, movement detection module 22 may alert (e.g., trigger an interrupt, send a message, etc.) UI module 20 when movement detection module 22 identifies motion data obtained from motion sensors 15 that at least approximately corresponds to one or more of predefined movements. Movement detection module 22 may provide to UI module 20, data about the detected movement, for instance, data that defines the particular predefined movement indicated by the motion data.

As described below, UI module 20 may cause wearable 10 to perform one or more operations based on movement detected by movement detection module 22. For example, UI module 20 may alter the presentation of a user interface (e.g., user interfaces 14A and 14B) depending on the predefined movement identified by movement detection module 22. For example, at any particular time, movement detection module 22 may obtain motion sensor data, check the motion sensor data against one or more expected sensor data patterns or profiles that are normally observed by motion sensors 15 when wearable 10 moves in a certain direction, speed, acceleration, etc., and output data to UI module 20 that defines the predefined movement of wearable 10 being recognized from the motion sensor data. UI module 20 may alter the presentation of a user interface depending on the predefined movement identified by movement detection module 22.

UID 12 of wearable 10 may provide input and/or output functionality for wearable 10. UID 12 may be implemented using one or more various technologies. For instance, UID 12 may function as input device using a presence-sensitive input screen, such as a resistive touchscreen, a surface acoustic wave touchscreen, a capacitive touchscreen, a projective capacitance touchscreen, a pressure sensitive screen, an acoustic pulse recognition touchscreen, or another presence-sensitive display technology. UID 12 may function as output (e.g., display) device using any one or more display devices, such as a liquid crystal display (LCD), a dot matrix display, a light emitting diode (LED) display, an organic light-emitting diode (OLED) display, e-ink, or similar monochrome or color displays capable of outputting visible information to a user of wearable 10.

In some examples, UID 12 may include a presence-sensitive display that may include a display device and receive tactile input from a user of wearable 10. UID 12 may receive indications of tactile input by detecting one or more gestures from a user (e.g., the user touching or pointing to one or more locations of UID 12 with a finger or a stylus pen). UID 12 may present output to a user, for instance at a presence-sensitive display. UID 12 may present the output as a graphical user interface (e.g., user interfaces 14A and 14B), which may be associated with functionality provided by wearable 10.

For example, UID 12 may present user interfaces 14A and 14B. User interface 14A includes arrangement 30A of a visual stack of content cards 16A-16N and user interface 14B includes arrangement 30B of the same visual stack of content cards 16A-16N shown in user interface 14B. Each of content cards 16A-16N (collectively "content cards 16") may contain information (e.g., text, graphics, etc.) that is viewable from UID 12.

Similar to a stack of playing cards, user interfaces 14A and 14B depict the visual stack of content cards 16 as a group of graphical elements being overlaid one on top of the other. Each of content cards 16A-16N may be associated functionality of computing platforms, operating systems, applications, and/or services executing at or accessible by wearable 10 (e.g., notification services, electronic message applications, Internet browser applications, mobile or desktop operating systems, etc.). A user may interact with user interfaces 14A and 14B while being presented at UID 12 to cause wearable 10 to perform operations relating to functions.

Content cards 16A and 16D represent content cards 16 that each include information associated with a text-based messaging service application executing at wearable 10. Content cards 16A and 16D may include text-based information related to two different conversations between a user of wearable 10 and two different users of the messaging service. For example, a message account associated with wearable 10 may receive a notification or alert to a message received from a messaging service. Wearable 10 may present the information associated with content card 16A in response to the receipt of the notification. From content card 16A, the user of wearable 10 can view the content associated with the message and compose a reply message.

Content card 16B represents a content card 16 that includes weather information directed to a weather information services application (e.g., for viewing a forecast, receiving emergency weather alerts, etc.) and content card 16C may include a photo, video, or other image data associated with a photo or imaging application (e.g., a viewfinder of a camera, a picture or video playback, etc.). Content card 16N is another example of content cards 16 and includes an image of a clock associated with a time or calendar application. Still many other examples of content cards 16 exist, including media player related content cards, Internet search (e.g., text-based, voice-based, etc.) related content cards, navigation related content cards, and the like.

User interface 14A illustrates arrangement 30A of the visual stack of content cards 16. Arrangement 30A includes the visual stack of content cards 16 being displayed by wearable 10 in a "top-down" view or arrangement. Arrangement 30A shows information associated with a single content card 16 of the visual stack while obscuring the information associated with each of the other content cards 16 of the visual stack. In other words, information of a top content card from the visual stack (e.g., content card 16A) is visible at UID 12, while the information of content cards 16B-16N from the visual stack is visually obscured "behind" the top content card.

In contrast to user interface 14A, user interface 14B illustrates arrangement 30B of the visual stack of content cards 16. Arrangement 30B represents a "fan-out" arrangement of the visual stack of content cards 16. In arrangement 30B, the top content card (e.g., content card 16A) only partially obscures the information of each of the other content cards 16B-16N. Said differently, the information associated with the top content card (e.g., content card 16A) is unobscured from view while being displayed at UID 12, while a portion of the information associated with each of the other content cards 16B-16N is also visible. Arrangement 30B enables a user of wearable 10 to quickly glance at the information associated with each of content cards 16. In this manner, wearable 10 may enable a user to more quickly and easily view different content cards 16 in the visual stack.

UI module 20 may receive and interpret inputs detected at UID 12 (e.g., as a user provides one or more gestures at one or more locations of UID 12 at which a user interface is displayed) and movements identified by movement detection module 22 (e.g., from motion sensors 15). UI module 20 may cause wearable 10 to perform functions by relaying information about the detected inputs and identified movements to one or more associated platforms, operating systems, applications, and/or services executing at wearable 10.

Responsive to obtaining and relaying information about the detected inputs and identified movements, UI module 20 may receive information and instructions from the one or more associated platforms, operating systems, applications, and/or services executing at wearable 10 for generating and altering a user interface associated with wearable 10 (e.g., user interfaces 14A and 14B). In this way, UI module 20 may act as an intermediary between the one or more associated platforms, operating systems, applications, and/or services executing at wearable 10 and various input and output devices of wearable 10 (e.g., UID 12, motion sensors 15, a speaker, a LED indicator, other output devices, etc.) to produce output (e.g., a graphic, a flash of light, a sound, a haptic response, etc.) with wearable 10.

In some examples, UI module 20 may interpret inputs and/or movement data detected at UID 12 and by movement detection module 22, and in response to the inputs and/or movement data, cause UID 12 to alter the presentation of user interfaces 14A and 14B. For instance, in one example, a user may cause housing 18 and/or attachment 16 of wearable 10 to move. UI module 20 may alter the presentation of user interface 14A in response to wearable 10 moving. For example, UI module 20 may cause UID 12 to present the visual stack of content cards 16 in arrangement 30A prior to the movement, and may cause UID 12 to present the visual stack in arrangement 30B after the movement.

UI module 20 may maintain a data store that maintains an association between one or more predefined movements and one or more respective arrangements of content cards 16. When UI module 20 determines that one of the predefined movements of wearable 10 has been identified by movement detection module 22, UI module 20 may select the arrangement of content cards 16 that corresponds to the movement. UI module 20 may cause UID 12 to display the visual stack of content cards 16 in that selected, and corresponding arrangement. In this way, UI module 20 may select an arrangement of content cards in response to, and based on, movement that corresponds to a predefined movement.

In some examples, after presenting the visual stack of content cards 16 in arrangement 30A or 30B, a user may provide a touch input (e.g., a gesture) at a location of UID 12. The location of the touch input may correspond to an area or region of UID 12 at which a portion of the information associated with one of content cards 16 is being displayed. UI module 20 may determine that the touch input corresponds to a selection of the one of content cards 16 that has a portion of information being presented at the location of the touch input. Responsive to determining the selection of one of content cards 16, UI module 20 may cause UID 12 to present the selected one of content cards 16 as a new "top-card" to replace the current top-card. UI module 20 may cause UID 12 to present the information associated with a selected one of content cards 16 without any obstruction from information associated with any other content cards 16. In some examples, UI module 20 may relay an indication of the touch input to an application, platform, component, etc. associated with the selected content card to cause wearable 10 to invoke that application, platform, component, etc. to perform a function.

In operation, wearable 10 may display a visual stack of content cards in a first arrangement from a plurality of arrangements. For example, UI module 20 may cause UID 12 to present user interface 14A which includes the visual stack of content cards 16 being displayed in arrangement 30A. UI module 20 may cause content card 16Ato be displayed as a top-card of the visual stack of content cards 16. In some examples, arrangement 30A represents a "default" arrangement of content cards 16. In other words, without detecting any other movement or receiving any other indications of input, UI module 20 may cause UID 12 to present user interface 14A (e.g., when wearable 10 first powers-up).

A motion sensor of wearable 10 may detect movement of wearable 10. For example, one or more motion sensors 15 (e.g., tilt sensors, gyros, accelerometers, etc.) may detect movement of wearable 10 as a user moves (e.g., twists) the part of his or her body that attachment device 17 is attached to, and causes the direction, acceleration, orientation, etc. of housing 18 and/or attachment device 17 to change. Based on the detected movement, motion sensors 15 may generate motion data that divines the detected movement. Movement detection module 22 may obtain the motion data generated by motion sensors 15 while wearable 10 moves.

Movement detection module 22 may compare the movement data obtained from motion sensors 15 to a database or data store of one or more predefined movements. Movement detection module 22 may determine that the motion sensor data matches or otherwise correlates to a particular movement of wearable 10 when a user of wearable 10 waves, twists, shakes, or otherwise moves the arm or wrist that attachment device 17 is fastened to. For example, movement detection module 22 may determine that the motion sensor data indicates a change in speed, acceleration, direction, rotation, or other characteristic of movement that corresponds to the movement of wearable 10 when a person twists his or her arm or wrist in a certain way. Movement detection module 22 may output an indication (e.g., data) to UI module 20 that alerts UI module 20 as to which of the predefined movements that the movement data corresponds to.

Responsive to determining that the movement of wearable 10 corresponds to a predefined movement, wearable 10 may select, based on the predefined movement, a second arrangement from the plurality of arrangements. The second arrangement may be different from the first arrangement. For example, UI module 20 may input the identified predefined movement into one or more rules UI module 20 uses for determining how to change the presentation of content cards 16. UI module 20 may determine that the predefined movement that matches the recent movement of wearable 10 corresponds to the movement associated with arrangement 30B (e.g., a fan-out arrangement).

Wearable 10 may display the visual stack of content cards in the second arrangement. For example, UI module 20 may cause UID 12 to refrain from presenting or otherwise cease displaying user interface 14A and replace the presentation of user interface 14A with user interface 14B. UID 12 may display the visual stack of content cards 16 in arrangement 30B.

In this manner, wearable may enable a user to more quickly and easily view different content cards 16 by moving wearable 10 in a certain way. By providing certain, easy-to-perform movements while wearing wearable 10, that require less focus or control, than other types of inputs, a wearable such as wearable 10 may enable a user to more quickly and intuitively navigate through a visual stack of content cards, even if the user is immersed in other activities that demand much of the user's attention or focus.

Unlike other types of wearable devices that rely primarily on speech, touch, or other types of input, a wearable such as this, can enable a user to easily move through a visual stack of content cards, even if the user is using his or her hands to perform some other action that is unrelated to the navigation (e.g., cooking, bicycling, standing in line at an airport) or otherwise makes providing voice commands or touch inputs difficult. Since the wearable enables a user to more easily navigate through a visual stack through simple movements, the wearable according to these techniques may receive fewer false or incorrect touch or spoken inputs. By processing fewer false or incorrect inputs, the techniques may enable a wearable to perform fewer operations and conserve electrical (e.g. battery) power.

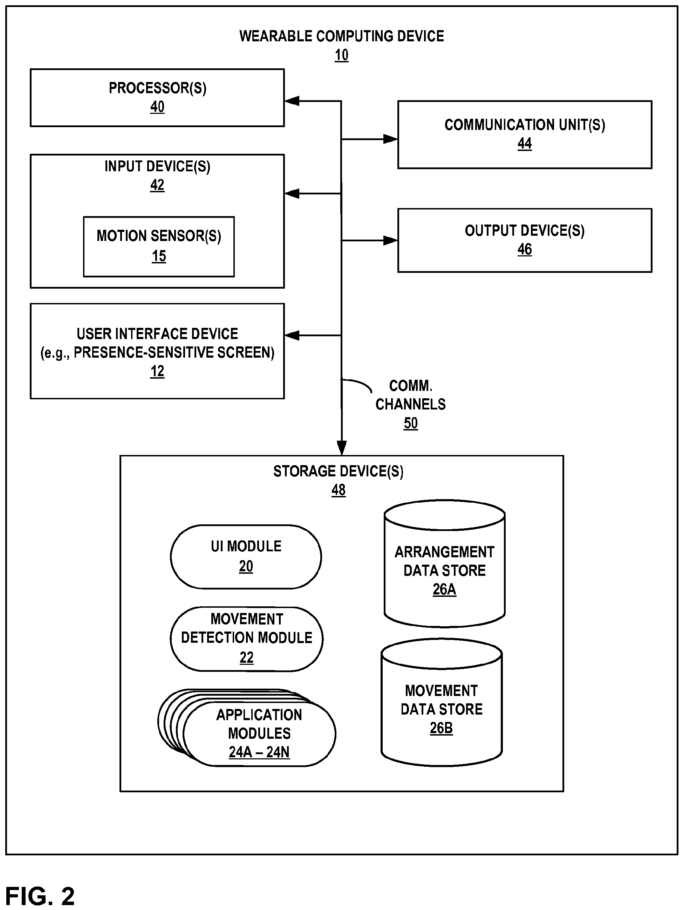

FIG. 2 is a block diagram illustrating an example wearable computing device that is configured to display different arrangements of a visual stack of content cards, in accordance with one or more aspects of the present disclosure. Wearable 10 of FIG. 2 is described below within the context of FIG. 1. FIG. 2 illustrates only one particular example of wearable 10, and many other examples of wearable 10 may be used in other instances and may include a subset of the components included in example wearable 10 or may include additional components not shown in FIG. 2.

As shown in the example of FIG. 2, wearable 10 includes UID 12, one or more processors 40, one or more input devices 42, one or more communication units 44, one or more output devices 46, and one or more storage devices 48. In the illustrated example, input devices 42 includes motion sensors 15 and storage devices 48 of wearable 10 includes UI module 20, motion detection module 22, application modules 24A-24N (collectively referred to as "application modules 24"). Storage devices 48 also includes arrangement data store 26A and movement data store 26B (collectively referred to as "data stores 26"). Communication channels 50 may interconnect each of the components 12, 14, 20, 22, 24, 26, 40, 42, 44, 46, and 52 for inter-component communications (physically, communicatively, and/or operatively). In some examples, communication channels 50 may include a system bus, a network connection, an inter-process communication data structure, or any other method for communicating data.

Data store 26A may maintain a database or storage repository of a plurality of arrangements or layouts associated with a visual stack of content cards. Each arrangement may include instructions that UI module 20 uses to arrange or order a presentation of a visual stack of content cards. The plurality of arrangements may be indexed according to an identifier associated with a predefined movement obtained from movement detection module 22. UI module 20 may perform a look-up of a predefined movement identifier (e.g., obtained from movement detection module 22) at data store 26A to identify, from amongst the plurality of arrangements stored at data store 26A, an arrangement that matches the predefined movement and which UI module 20 may select and use to display a visual stack of content cards.

Data store 26B may maintain a database or storage repository of predefined movements, patters, or profiles. Movement detection module 22 may perform a look-up at least a portion of motion data obtained from motion sensors 15 to identify, from amongst the plurality of predefined movements stored at data store 26B, a predefined movement that corresponds to motion data obtained from motion sensors 15. Data stores 26A and 26B are may be related such that each predefined movement from the plurality of predefined movements in data stores 26B corresponds to a different, respective arrangement from the plurality of arrangements stored at data stores 26A.

One or more input devices 42 of wearable 10 may receive input. Examples of input are tactile, audio, video, and sensor input. Input devices 42 of wearable 10, in some examples, include a presence-sensitive input device (e.g., a touch sensitive screen, a presence-sensitive display), mouse, keyboard, voice responsive system, video camera, microphone, or any other type of device for detecting input from a human or machine. In some examples, input devices 42 include physiological sensors for obtaining physiological parameter information associated with a user of wearable 10. For example, input devices 42 may include a heart monitor sensor, a temperature sensor, a galvanic skin response sensor, an accelerometer, a gyroscope, a pressure sensor, a blood pressure sensor, and/or any other sensor for measuring a physiological parameter that wearable 10 may use for determining a physiological condition of a user.

One or more output devices 46 of wearable 10 may generate output. Examples of output are tactile, audio, and video output. Output devices 46 of wearable 10, in some examples, include a presence-sensitive display, sound card, video graphics adapter card, speaker, cathode ray tube (CRT) monitor, liquid crystal display (LCD), or any other type of device for generating output to a human or machine.

One or more communication units 44 of wearable 10 may communicate with external devices via one or more networks by transmitting and/or receiving network signals on the one or more networks. For example, wearable 10 may use communication unit 44 to transmit and/or receive radio signals on a radio network such as a cellular radio network. Likewise, communication units 44 may transmit and/or receive satellite signals on a satellite network such as a GPS network. Examples of communication unit 44 include a network interface card (e.g. such as an Ethernet card), an optical transceiver, a radio frequency transceiver, a GPS receiver, or any other type of device that can send and/or receive information. Other examples of communication units 44 may include Bluetooth®, GPS, 3G, 4G, and Wi-Fi® radios found in mobile devices as well as Universal Serial Bus (USB) controllers.

In some examples, UID 12 of wearable 10 may include functionality of input devices 42 and/or output devices 46. In the example of FIG. 2, UID 12 may be or may include a presence-sensitive input device. In some examples, a presence-sensitive input device may detect an object at and/or near the presence-sensitive input device. As one example range, a presence-sensitive input device may detect an object, such as a finger or stylus that is within two inches or less of the presence-sensitive input device. In another example range, a presence-sensitive input device may detect an object six inches or less from the presence-sensitive input device, and other ranges are also possible. The presence-sensitive input device may determine a location (e.g., an (x,y) coordinate) of the presence-sensitive input device at which the object was detected. The presence-sensitive input device may determine the location selected by the input device using capacitive, inductive, and/or optical recognition techniques. In some examples, presence-sensitive input device provides output to a user using tactile, audio, or video stimuli as described with respect to output device 46, and may be referred to as a presence-sensitive display.

While illustrated as an internal component of wearable 10, UID 12 also represents an external component that shares a data path with wearable 10 for transmitting and/or receiving input and output. For instance, in one example, UID 12 represents a built-in component of wearable 10 located within and physically connected to the external packaging of wearable 10 (e.g., a screen on a mobile phone or wearable computing device). In another example, UID 12 represents an external component of wearable 10 located outside and physically separated from the packaging of wearable 10 (e.g., a monitor, a projector, etc. that shares a wired and/or wireless data path with wearable 10).

One or more storage devices 48 within wearable 10 may store information for processing during operation of wearable 10. In some examples, storage device 48 is a temporary memory, meaning that a primary purpose of storage device 48 is not long-term storage. Storage devices 48 on wearable 10 may be configured for short-term storage of information as volatile memory and therefore not retain stored contents if powered off. Examples of volatile memories include random access memories (RAM), dynamic random access memories (DRAM), static random access memories (SRAM), and other forms of volatile memories known in the art.

Storage devices 48, in some examples, also include one or more computer-readable storage mediums. Storage devices 48 may be configured to store larger amounts of information than a temporary memory. Storage devices 48 may further be configured for long-term storage of information as non-volatile memory space and retain information after power on/off cycles. Examples of non-volatile memories include magnetic hard discs, optical discs, floppy discs, flash memories, or forms of electrically programmable memories (EPROM) or electrically erasable and programmable (EEPROM) memories. Storage devices 48 may store program instructions and/or data associated with modules 20, 22, and 24.

One or more processors 40 may implement functionality and/or execute instructions within wearable 10. For example, processors 40 on wearable 10 may receive and execute instructions stored by storage devices 48 that execute the functionality of modules 20, 22 and 24. These instructions executed by processors 40 may cause wearable 10 to store information within storage devices 48 during program execution. Processors 40 may execute instructions of modules 20, 22, and 24 to cause UID 12 to present a visual stack of content cards in an arrangement that depends on movement detected by motion sensors 15. That is, modules 20, 22, and 24 may be operable by processors 40 to perform various actions, including displaying a visual stack of content cards in response to movement associated with wearable 10.

One or more application modules 24 may provide graphical information and instructions to UI module 20 that UI module 20 includes as content or information contained in a graphical representation of content cards 16. For example, application module 24A may be a messaging application that executes at wearable 10 to provide wearable 10 with access to a messaging service. Application module 24A may obtain information (e.g., via a network) that includes content of a message received by a messaging account associated with wearable 10. Application module 24A may provide the content of the message (e.g., textual information) as well as instructions for causing UI module 20 to output content card 16A for display at UID 12. Application modules 24B-24N may likewise each provide respective information and instructions for causing UI module 20 to present the content associated with each of content cards 16.

In accordance with aspects of this disclosure, motion sensors 15 of wearable 10 may detect movement associated with wearable 10 while UID 12 of wearable 10 displays a visual stack of content cards in a first arrangement from a plurality of arrangements. For example, UI module 20 may cause UID 12 to present user interface 14A having a visual stack of content cards 16 displayed in arrangement 30A. UI module 20 may access arrangement data store 26A to identify a default arrangement or layout for content cards 16. UI module 20 may cause UID 12 to present the default arrangement or layout while no movement is being detected by motion sensors 15. In other words, if UI module 20 receives no indication of movement from movement detection module 22, UI module 20 may cause UID 12 to present the visual stack of content cards 16 in top-down, single stack view.

While user interface 14A is displayed at UID 12, a user of wearable 10 may cause attachment 16 and/or housing 18 to move in a certain direction, with a certain speed, rotation, etc. in an attempt by the user to match the movement of wearable 10 to a predefined movement for causing wearable 10 to change the arrangement of the visual stack of content cards 16. For example, motion detection module 22 may determine that motion data generated by motion sensors 15 corresponds to one of the predefined movements stored at movement data store 26B. Motion detection module 22 may output an alert or trigger an interrupt to indicate, to UI module 20, that movement of wearable 10 matched a predefined movement.

Responsive to determining that the movement of wearable 10 corresponds to a predefined movement, UI module 20 may select, based on the predefined movement, a second arrangement from the plurality of arrangements. The second arrangement may be different from the first arrangement. For example, UI module 20 may perform a look-up of the predefined movement detected by movement detection module 22 at data stores 26A to determine which arrangement from the plurality of arrangements stored at data stores 26A matches the predefined movement. UI module 20 may determine that arrangement 30B matches the predefined movement detected by movement detection module 22.

Wearable 10 may display the visual stack of content cards in the second arrangement. For example, after selecting an arrangement from data store 26A that matches or otherwise corresponds to the predefined movement detected by movement detection module 22, UI module 20 may cause UID 12 to display the visual stack of content cards in the second arrangement.

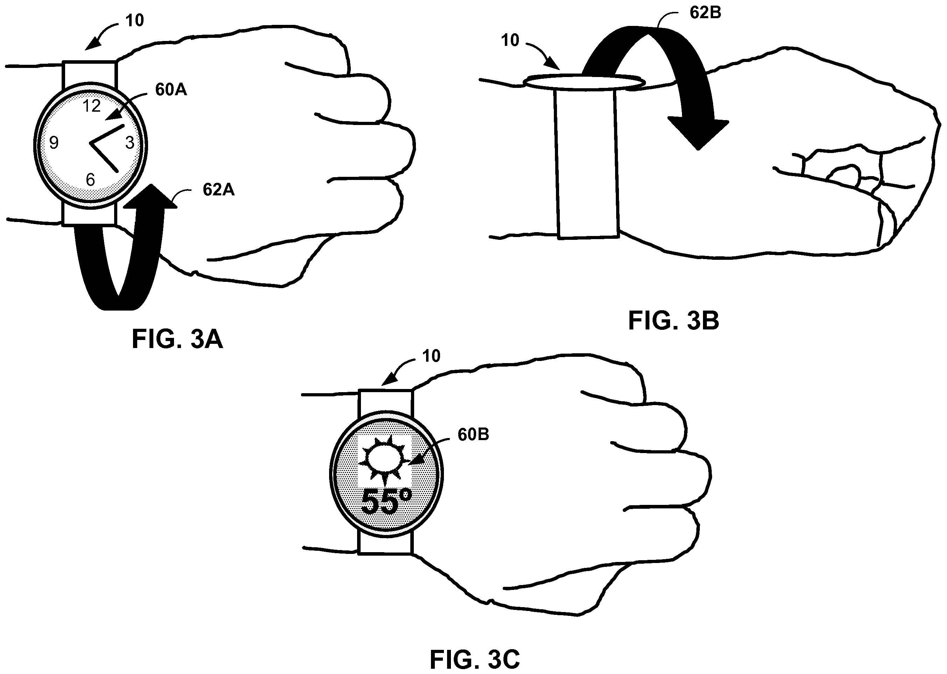

FIGS. 3A through 4C are conceptual diagrams illustrating example movements of an example wearable computing device, in accordance with one or more aspects of the present disclosure. FIGS. 3A through 4C are described below within the context of wearable 10 from FIGS. 1 and 2.

FIG. 3A illustrates a view of a display (e.g., UID 12) of wearable 10 as wearable 10 is being worn on a wrist of the user with the display of wearable 10 facing the user's point of view. From the view being shown in FIG. 3A, wearable 10 may cause UID 12 to present a user interface 60A including a visual stack of content cards being arranged in a first arrangement. For instance, the arrangement shown in FIG. 3A represents a top-town view of the visual stack with information associated with only a single, "top-card" (e.g., that includes a clock face image) of the visual stack being displayed at a time. The user may cause wearable 10 to move in the direction and manner indicated by movement arrow 62A. For example, the user may twist his or her wrist in a direction and/or with a degree of rotation, such that the display of wearable 10 moves from a viewable angle, to a non-viewable angle (e.g., perpendicular to the user's view).

FIG. 3B shows a view of the display of wearable 10 as wearable 10 is being worn on a wrist of the user after the user turns his or her wrist in a direction that rotates his or her wrist to a non-viewable angle (e.g., the display projects graphical content in a direction that is perpendicular to the user's point of view). Following the movement shown in FIG. 3A, the user may continue to cause wearable 10 to move by causing wearable 10 to move in the direction and manner indicated by movement arrow 62B. For example, the user may twist his or her wrist back in the opposite direction indicated by movement arrow 62A. The user may twist his or her wrist in a direction and/or with a degree of rotation, such that the display of wearable 10 moves from a non-viewable angle, back to a viewable angle. In some examples, movement arrows 62A and 62B represent an uninterrupted, continuous single of wearable 10 such that the display of wearable 10 begins at a viewable angle with respect to the user's point of view, changes to a non-viewable angle with respect to the user's point of view, and reverts back to the viewable angle, all with a single motion.

FIG. 3C shows that the user may complete the movement of wearable 10, such that after moving wearable in the manner depicted by movement arrows 62A and 62B in FIGS. 3A and 3B, the user may cause the display of wearable 10 to be user facing again. Movement detection module 22 may obtain sensor data from one or more motion sensors 15 (e.g., an accelerometer, a tilt sensor, etc.) during the time when the user causes wearable 10 to move in the directions and in the manners indicated by movement arrows 62A and 62B. Movement detection module 22 may determine that the sensor data indicates a movement pattern or profile that corresponds to one or more predefined movements stored at movement data store 26B. Movement detection module 22 may send information to UI module 20 indicating that the predefined movement was detected.

UI module 20 may cause UID 12 to display user interface 60B which includes a visual stack of content cards in a second arrangement. That is, UI module 20 may look up the predefined movement received from movement detection module 22 at arrangement data store 26A and select the arrangement shown in user interface 60B based on the predefined movement. UI module 20 may cause UID 12 to display the visual stack of content cards associated with user interface 60A, in the arrangement shown in user interface 60B. Prior to detecting movement, wearable 10 may display the arrangement shown in FIG. 3A which represents a top-town view of the visual stack with information associated with only a single "next card" (e.g., a card, following the top-card, that includes weather information) of the visual stack being displayed at a time. Subsequent to detecting movement, wearable display 10 may display the arrangement of user interface 60B may represent a next card, following the top-card shown in the visual stack

Said differently, FIG. 3A shows that wearable 10 may display user interface 60A which includes a visual stack of content cards displayed in a first arrangement by displaying only a first content card (e.g., containing information associated with a clock application) from the visual stack of content cards. After detecting the movement indicated in FIGS. 3A and 3B by movement arrows 62A and 62B, wearable 10 may display user interface 60B which includes the visual stack of content cards displayed in the second arrangement by displaying only a second content card (e.g., containing weather information associated with a weather application) from the visual stack of content cards. The second content card is different from the first content card.

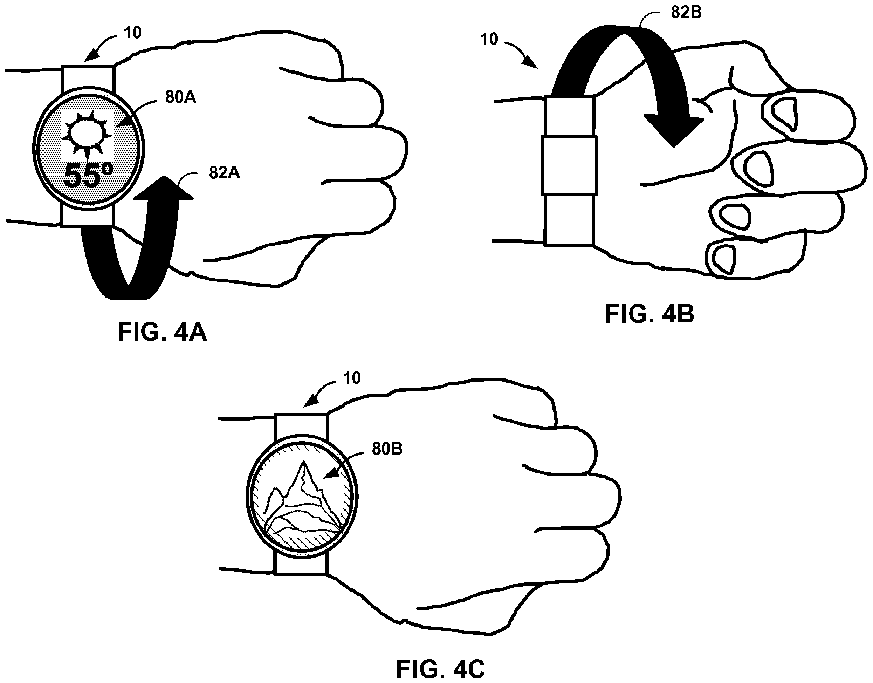

FIG. 4A shows that wearable device 10 may display user interface 80A, which includes a visual stack of content cards displayed in a second arrangement (e.g., including the weather information associated with the weather application). Wearable 10 may detect the movement indicated by movement arrows 82A and 82B shown in FIGS. 4A and 4B. After detecting the movement indicated by movement arrows 82A and 82B, FIG. 4C shows that wearable 10 may display user interface 80B which includes the visual stack of content cards displayed in a third arrangement that is different from the first arrangement and second arrangements.

In other words, FIGS. 4A-4C show that, while the movement shown in FIGS. 3A - 3C may be a first movement, motion sensors 15 of wearable 10 may detect second movement of wearable 10, and responsive to determining that the second movement of wearable 10 corresponds to a second predefined movement, wearable 10 may select, based on the second predefined movement, a third arrangement from the plurality of arrangements. Wearable 10 may display the visual stack of content cards in the third arrangement.

Movement detection module 22 may be capable of detecting subtle differences between one movement of wearable 10 and a different movement of wearable 10. For example, the movement indicated by movement arrows 62A and 62B represents a partial rotation of the user's wrist. The movement indicated by movement arrows 82A and 82B represents a full rotation of the user's wrist. Movement detection module 22 may determine that a partial rotation corresponds to a first predefined movement and a full rotation may correspond to a second, different than the first, predefined movement. In this way, wearable 10 can enable a user to provide two or more similar but different wrist-rotation type movements that wearable 10 can detect, and map to two or more different, respective arrangement of content cards.

In some examples, a visual stack of content cards may be an ordered set of content cards and the first content card being displayed in the first arrangement may be adjacent to the second content card in the ordered set of content cards. In other words, wearable 10 may detect movement and based on that movement, cycle through the visual stack, and cause UID 12 to display a next card in the visual stack. In some examples, the visual stack of content cards may be an ordered set of content cards and the second content card may be an initial content card in the ordered set of content cards. For example, the first arrangement may include a middle content card from the visual stack. In response to the movement detected by movement detection module 22, UI module 20 may cause UID 12 to present a "top-card" or a default card in the second arrangement of the visual stack. In this way, a user can provide an intuitive and simple movement, to cause wearable 10 to display a "next card" or a "top-card" (e.g., an initial or default card).

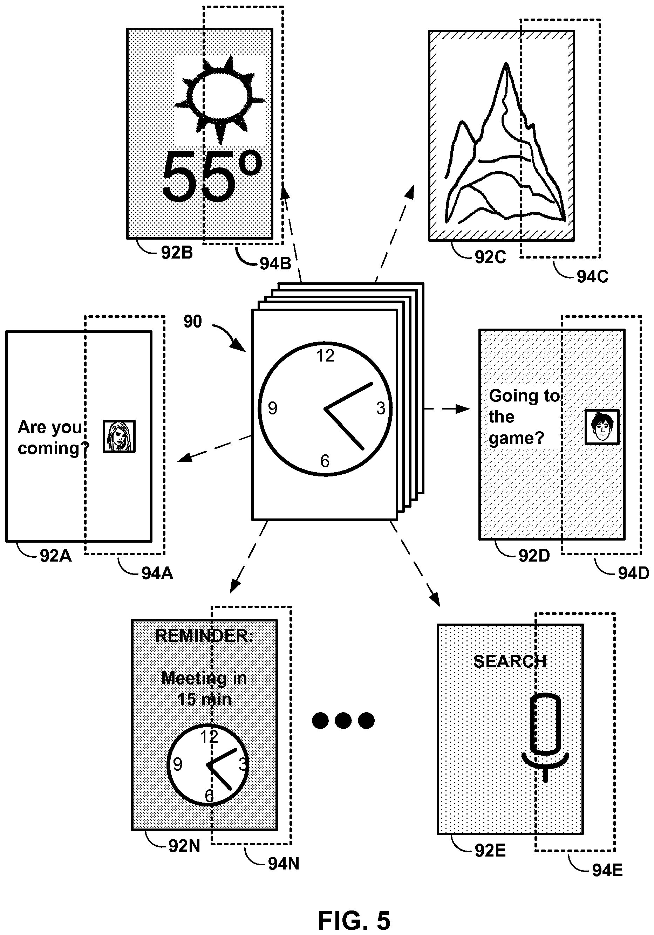

FIG. 5 is a conceptual diagram illustrating example content cards of a visual stack, in accordance with one or more aspects of the present disclosure. FIG. 5 is described below within the context of wearable 10 of FIGS. 1 and 2.

FIG. 5 shows, conceptually, the relationship between each of content cards 92A-92N (collectively referred to as "content cards 92"), included in visual stack 90. Wearable 10 may present visual stack 90 as part of a user interface at UID 12. Content card 92A may be a "top-card" or an initial card and content cards 92B - 92N represent the other content cards from visual stack 90. In some examples, only respective portions of information 94A-94N (collectively referred to as "portions 94") of content cards 92A-92N may be displayed.

Wearable 10 may display visual stack 90 of content cards 92 in a first arrangement from a plurality of arrangements. For example, wearable 10 may display card 92A as a single content card from visual stack 90.

A motion sensor (e.g., motion sensors 15) may detect movement of wearable 10 and responsive to determining that the movement corresponds to a predefined movement, wearable 10 may select, based on the predefined movement, a second arrangement from the plurality of arrangements. For example, wearable 10 may detect a wrist movement.

Responsive to detecting the wrist movement and receiving an indication from motion detection module 22 that the detected wrist movement corresponds to a predefined movement, UI module 20 may select a second arrangement for which to display visual stack 90. The second arrangement may include a presentation of the first content card displayed in the first arrangement prior to the movement, in addition to a respective portion of at least one second content card other than the first content card from the visual stack of content cards being displayed beneath the first content card. In other words, the second arrangement may represent a "fan-out" of visual stack 90. The second arrangement may show the information associated with the first content card (e.g., content card 92A) in addition to at least one of or all of the respective portions 94 of the other content cards 92.

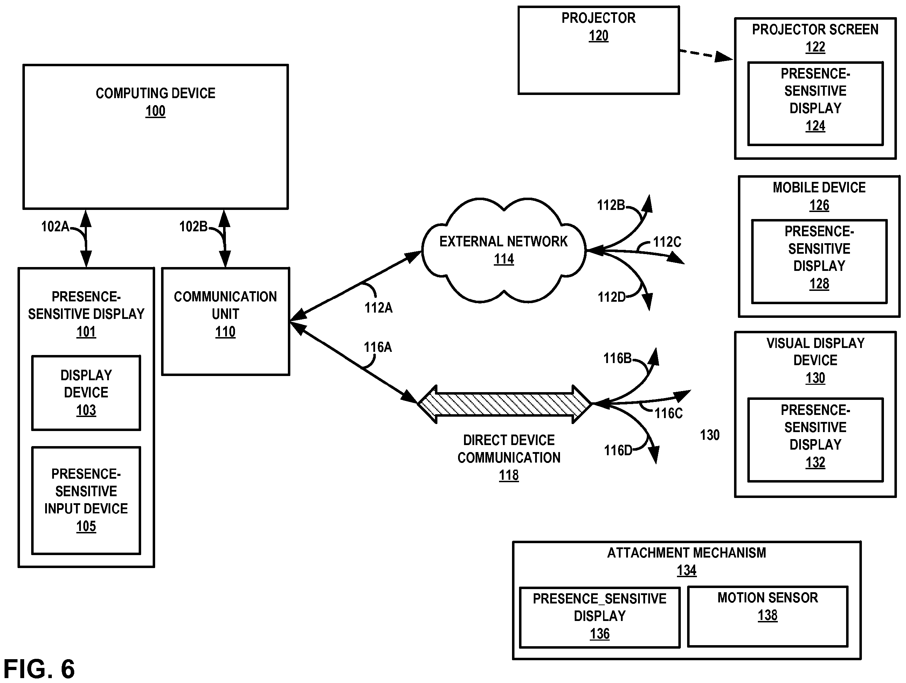

FIG. 6 is a conceptual block diagram illustrating an example computing device that outputs graphical content for display at a remote device, in accordance with one or more techniques of the present disclosure. FIG. 6 is a block diagram illustrating an example computing device (e.g., wearable 10 of FIG. 1 and/or one or more processors 40 of FIG. 2) that outputs graphical content for display at a remote device and can receive indications of a state of a motion sensor 138 and/or presence-sensitive display 136 at a remote attachment mechanism 134, in accordance with one or more techniques of the present disclosure.

Graphical content, generally, may include any visual information that may be output for display, such as text, images, a group of moving images, etc. The example shown in FIG. 6 includes a computing device 100, presence-sensitive display 101, communication unit 110, projector 120, projector screen 122, mobile device 126, visual display device 130, and attachment mechanism 134. Although shown for purposes of example in FIGS. 1 and 2 as a stand-alone wearable 10, a computing device such as computing device 100 may, generally, be any component or system that includes a processor or other suitable computing environment for executing software instructions and, for example, need not include a presence-sensitive display.

As shown in the example of FIG. 3, computing device 100 may be a processor that includes functionality as described with respect to processors 40 in FIG. 2. In such examples, computing device 100 may be operatively coupled to presence-sensitive display 101 by a communication channel 102A, which may be a system bus or other suitable connection. Computing device 100 may also be operatively coupled to communication unit 110, further described below, by a communication channel 102B, which may also be a system bus or other suitable connection. Although shown separately as an example in FIG. 3, computing device 100 may be operatively coupled to presence-sensitive display 101 and communication unit 110 by any number of one or more communication channels.

Presence-sensitive display 101 may include display device 103 and presence-sensitive input device 105. Display device 103 may, for example, receive data from computing device 100 and display the graphical content. In some examples, presence-sensitive input device 105 may determine one or more user inputs (e.g., continuous gestures, multi-touch gestures, single-touch gestures, etc.) at presence-sensitive display 101 using capacitive, inductive, and/or optical recognition techniques and send indications of such user input to computing device 100 using communication channel 102A. In some examples, presence-sensitive input device 105 may be physically positioned on top of display device 103 such that, when a user positions an input unit over a graphical element displayed by display device 103, the location at which presence-sensitive input device 105 corresponds to the location of display device 103 at which the graphical element is displayed. In other examples, presence-sensitive input device 105 may be positioned physically apart from display device 103, and locations of presence-sensitive input device 105 may correspond to locations of display device 103, such that input can be made at presence-sensitive input device 105 for interacting with graphical elements displayed at corresponding locations of display device 103.

As shown in FIG. 3, computing device 100 may also include and/or be operatively coupled with communication unit 110. Communication unit 110 may include functionality of communication unit 44 as described in FIG. 2. Examples of communication unit 110 may include a network interface card, an Ethernet card, an optical transceiver, a radio frequency transceiver, or any other type of device that can send and receive information. Other examples of such communication units may include Bluetooth ®, 3G, and Wi-Fi ® radios, Universal Serial Bus (USB) interfaces, etc. Computing device 100 may also include and/or be operatively coupled with one or more other devices, e.g., input devices, output devices, memory, storage devices, etc. that are not shown in FIG. 6 for purposes of brevity and illustration.

FIG. 6 also illustrates a projector 120 and projector screen 122. Other examples of projection devices may include electronic whiteboards, holographic display devices, and any other suitable devices for displaying graphical content. Projector 120 and projector screen 122 may include one or more communication units that enable the respective devices to communicate with computing device 100. In some examples, the one or more communication units may enable communication between projector 120 and projector screen 122. Projector 120 may receive data from computing device 100 that includes graphical content. Projector 120, in response to receiving the data, may project the graphical content onto projector screen 122. In some examples, projector 120 may determine one or more user inputs (e.g., continuous gestures, multi-touch gestures, single-touch gestures, double-bezel gestures, etc.) at projector screen using optical recognition or other suitable techniques and send indications of such user input using one or more communication units to computing device 100. In such examples, projector screen 122 may be unnecessary, and projector 120 may project graphical content on any suitable medium and detect one or more user inputs using optical recognition or other such suitable techniques.

Projector screen 122, in some examples, may include a presence-sensitive display 124. Presence-sensitive display 124 may include a subset of functionality or all of the functionality of UI device 22 as described in this disclosure. In some examples, presence-sensitive display 124 may include additional functionality. Projector screen 122 (e.g., an electronic whiteboard), may receive data from computing device 100 and display the graphical content. In some examples, presence-sensitive display 124 may determine one or more user inputs (e.g., continuous gestures, multi-touch gestures, single-touch gestures, double-bezel gestures, etc.) at projector screen 122 using capacitive, inductive, and/or optical recognition techniques and send indications of such user input using one or more communication units to computing device 100.

FIG. 6 also illustrates mobile device 126 and visual display device 130. Mobile device 126 and visual display device 130 may each include computing and connectivity capabilities. Examples of mobile device 126 may include e-reader devices, convertible notebook devices, hybrid slate devices, etc. Examples of visual display device 130 may include other semi-stationary devices such as televisions, computer monitors, etc. As shown in FIG. 3, mobile device 126 may include a presence-sensitive display 128. Visual display device 130 may include a presence-sensitive display 132. Presence-sensitive display 132, for example, may receive data from computing device 100 and display the graphical content. In some examples, presence-sensitive display 132 may determine one or more user inputs (e.g., continuous gestures, multi-touch gestures, single-touch gestures, double-bezel gestures, etc.) at projector screen using capacitive, inductive, and/or optical recognition techniques and send indications of such user input using one or more communication units to computing device 100.

As described above, in some examples, computing device 100 may output graphical content for display at presence-sensitive display 101, which is coupled to computing device 100 by a system bus or other suitable communication channel. Computing device 100 may also output graphical content for display at one or more remote devices, such as projector 120, projector screen 122, mobile device 126, and visual display device 130. For instance, computing device 100 may execute one or more instructions to generate and/or modify graphical content in accordance with techniques of the present disclosure. Computing device 100 may output the data that includes the graphical content to a communication unit of computing device 100, such as communication unit 110. Communication unit 110 may send the data to one or more of the remote devices, such as projector 120, projector screen 122, mobile device 126, and/or visual display device 130. In this way, computing device 100 may output the graphical content for display at one or more of the remote devices. In some examples, one or more of the remote devices may output the graphical content at a display device, such as a presence-sensitive display, that is included in and/or operatively coupled to the respective remote device.

In some examples, computing device 100 may not output graphical content at presence-sensitive display 101 that is operatively coupled to computing device 100. In other examples, computing device 100 may output graphical content for display at both a presence-sensitive display 101 that is coupled to computing device 100 by communication channel 102A, and at a display of one or more the remote devices. In such examples, the graphical content may be displayed substantially contemporaneously at each respective device. For instance, some delay may be introduced by the communication latency to send the data that includes the graphical content to the remote device. In some examples, graphical content generated by computing device 100 and output for display at presence-sensitive display 101 may be different than graphical content display output for display at one or more remote devices.

Computing device 100 may send and receive data using any suitable communication techniques. For example, computing device 100 may be operatively coupled to external network 114 using network link 112A. Each of the remote devices illustrated in FIG. 6 may be operatively coupled to network external network 114 by one of respective network links 112B, 112C, 112D, and 112E. External network 114 may include network hubs, network switches, network routers, etc., that are operatively inter-coupled thereby providing for the exchange of information between computing device 100 and the remote devices illustrated in FIG. 3. In some examples, network links 112A-112E may be Ethernet, ATM or other network connections. Such connections may be wireless and/or wired connections.

In some examples, computing device 100 may be operatively coupled to one or more of the remote devices included in FIG. 6 using direct device communication 118. Direct device communication 118 may include communications through which computing device 100 sends and receives data directly with a remote device, using wired or wireless communication. That is, in some examples of direct device communication 118, data sent by computing device 100 may not be forwarded by one or more additional devices before being received at the remote device, and vice-versa. Examples of direct device communication 118 may include Bluetooth®, Near-Field Communication, Universal Serial Bus, infrared, etc. One or more of the remote devices illustrated in FIG. 6 may be operatively coupled with computing device 100 by communication links 116A-116E. In some examples, communication links 116A-116E may be connections using Bluetooth®, Near-Field Communication, Universal Serial Bus, infrared, etc. Such connections may be wireless and/or wired connections.

In accordance with techniques of the disclosure, computing device 100 can be operable to display a visual stack of content cards in a first arrangement at presence-sensitive display 136 at attachment mechanism 134. For example, as described with respect to FIGS. 1 and 2, computing device 100 may be or be part of a wearable 10. Hence, computing device 100 may be mechanically coupled to an attachment mechanism, such as attachment mechanism 134 that may include a display, such as UID 12 or presence-sensitive display 136. In other examples, computing device 100 may be part of another, separate device from attachment mechanism 134. For example, computing device 100 can be part of a mobile computing device or a separate wearable computing device, or may be a mobile computing device or a separate wearable computing device.

In some examples, computing device 100 can detect movement associated with attachment mechanism 134 and based on the movement corresponding to a predefined movement, computing device 100 can select an arrangement and display the visual stack in the selected arrangement, for instance, at presence-sensitive display device 101. In some examples computing device 100 can obtain sensor information via network 114 from motion sensor 138 and determine the movement associated with attachment mechanism 134 based on the received sensor data.

In some examples, the predefined movement used for selecting the arrangement may be a first predefined movement. Responsive to computing device 100 determining that the movement of attachment mechanism 134 corresponds to a second predefined movement, computing device 100 can refrain from displaying, or otherwise cease displaying, the visual stack of content cards, and instead, display a home screen graphical user interface. In other words, similar to traversing through, or fanning out, a visual stack of content cards, computing device 100 can detect movement and cause a home screen graphical user interface to be displayed at presence sensitive display 136 instead of, or in place of, the visual stack of content cards.

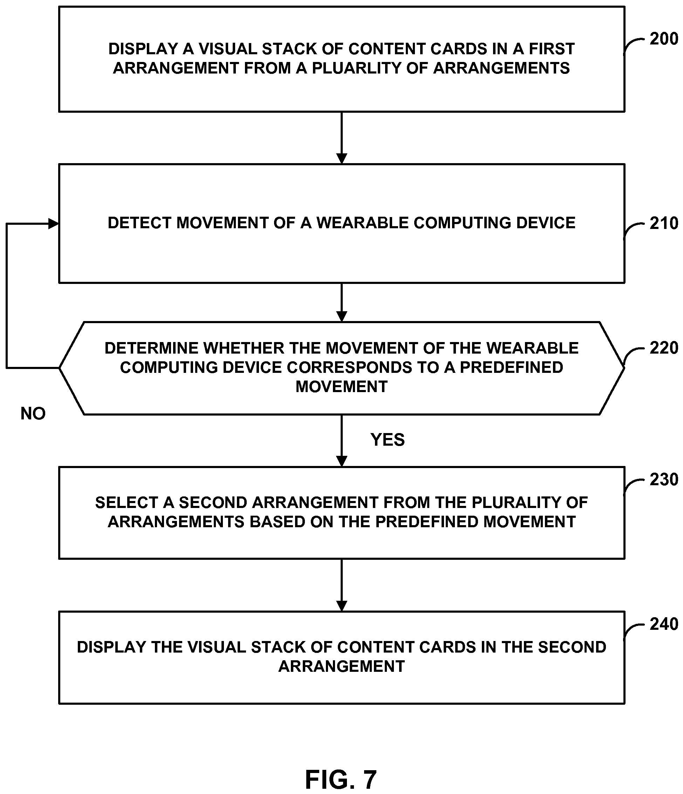

FIG. 7 is a flowchart illustrating example operations of an example wearable computing device that is configured to display a visual stack of content cards in different arrangements, in accordance with one or more aspects of the present disclosure. The process of FIG. 7 may be performed by one or more processors of a computing device, such as wearable 10 illustrated in FIG. 1 and FIG. 2. For purposes of illustration, FIG. 7 is described below within the context of wearable 10 of FIGS. 1 and 2. Although the techniques of FIG. 7 is described with reference to wearable 10 of FIGS. 1 and 2, in other examples, the techniques of FIG. 10 may be performed by another computing device or computing system, such as a computing device 100 of FIG. 5 that includes more or fewer components that wearable 10.

FIG. 7 illustrates that wearable 10 may display a visual stack of content cards in a first arrangement from a plurality of arrangements (200). For example, UI module 20 may cause UID 12 to present user interface 14A at UID 12 including presenting a visual stack of content cards 16 displayed in arrangement 30A.

At least one motion sensors 15 of wearable 10 may detect movement of wearable 10 (210). For example, movement detection module 22 may receive motion data from one or more motion sensors 15 and determine a movement from the motion data (e.g., a direction, an acceleration, a speed, a velocity, a degree of tilt, a degree of rotation, a luminance, etc.).

In some examples, motion sensors 15 and motion detection module 22 may detect movement of wearable 10 over a period of time. The movement may have a first amount of change in direction during a first portion of the period of time, and the movement may have a second amount of change in direction during a second portion of the period of time. The second amount of change in direction may be opposite the first amount of change in direction.

For example, over a period of approximately zero to five seconds, motion sensors 15 may detect movement of wearable 10. Motion sensors 15 may produce motion sensor data that indicates an accelerometer or velocity of wearable 10 detected by motion sensors 15 during the first five hundred milliseconds of the period of time and a second acceleration detected during the last five hundred milliseconds of the period of time. The data associated with the first acceleration or velocity may have a directional data component that indicates the acceleration or velocity of wearable 10 moved in a first direction (e.g., away from a user's body) and the second acceleration or velocity may have a directional component indicating that wearable 10 moved in a second, opposite direction (e.g., towards a user's body).

In some examples, the movement may have a first amount of change in degree of tilt during a first portion of the period of time, and the movement may have a second amount of change in degree of tilt during a second portion of the period of time, the second amount of change in degree of tilt being opposite the first amount of change in degree of tilt. In other words, motion sensors 15 may detect a first degree of tilt (e.g., ninety degrees) during the first second of the period of time and a second degree of tilt (e.g., negative ninety degrees) during the last half-second of the period of time.

In some examples, the movement has a first degree of rotation about an axis in a first direction during a first portion of the period of time, and the movement has a second degree of rotation about the axis in a second direction during a second portion of the period of time, the second direction being opposite the first direction. For example, motion sensors 15 may detect rotation of wearable 10 relative to the visible portion (e.g., a screen) of UID 12. For instance, UID 12 may present user interfaces 14A and 14B at UID 12 such that the graphical elements of interfaces 14A and 14B are displayed in a horizontal (e.g., XY) plane. Motion sensors 15 may detect a degree of tilt about one axis of the horizontal plane (e.g., the X axis or the Y axis). In this way, motion sensors 15 generate tilt data as a user causes housing 18 and UID 12 to tilt about an axis in one direction or another.

In some examples, the movement indicates that wearable 10 is in a first position at which the user is not likely able to view a display of the wearable computing device during a first portion of the period of time, and the movement indicates that wearable 10 is in a second position at which the user is likely able to view the display of the wearable computing device during a second portion of the period of time. For example, using the raw motion data from motion sensors 15, motion detection module 22 may determine whether wearable 10 is in a position (e.g., facing away from a user's general viewing direction, facing towards a user's general viewing direction, etc.) from which a user can typically view content displayed at UID 12. Motion detection module 22 may compare the tilt data to a predefined tilt pattern or profile stored at movement data store 26B. A predefined movement at data store 26B that matches the tilt data may indicate that wearable 10 is in one position or another.

Wearable 10 may determine whether the movement of wearable 10 corresponds to a predefined movement (220). For instance, movement detection module 22 may perform a look-up, at data store 26B, of a portion of motion data obtained from motion sensors 15 to determine whether the motion data matches or approximately corresponds to the movement pattern or profile stored in memory of wearable 10. Movement detection module 22 may analyze the motion data to identify one or more matching portions of motion data that have the same direction, acceleration, degree of orientation, degree of tilt, or change in direction, change in acceleration, change in degree of orientation, or change in degree of tilt as any of the plurality of predefined movements stored at data store 26B.

If none of the predefined movements correspond to the movement detected by the motion sensors, wearable 10 may ignore the movement (e.g., treating the movement as an inadvertent movement or anomaly). If one of the predefined movements corresponds to the movement, motion detection module 22 may output an indication (e.g., data, an identifier of the predefined movement, etc.) of the closest matching predefined movement to UI module 20.

In some examples, motion detection module 22 and motion sensors 15 may detect the movement of wearable 10 during a period of time, and movement detection module 22 may determine that the movement of wearable 10 corresponds to the predefined movement in response to determining that the period of time satisfies a time threshold. In other words, movement detection module 22 may determine whether the movement of wearable 10 occurs for a long enough period of time to indicate actual user intent to cause wearable 10 to change the arrangement of a visual stack of content cards. In this way, inadvertent movement of the wearable (e.g., when a user does not wish to interact with wearable 10) does not necessarily cause wearable 10 to alter the presentation of the visual stack.

In some examples, motion detection module 22 may determine that the movement corresponds to the predefined movement based on a determination that a direction of the movement corresponds to a direction of the predefined movement. In other words, if a predefined movement stored at data store 26B has a similar magnitude of acceleration, speed, level of force, etc., as a predefined movement, but has a different direction than the predefined movement, motion detection module 22 may not determine that the movement and the predefined movement correspond. Conversely, if a movement and a predefined movement share a similar direction, motion detection module 22 may determine that the shared direction represents an indication that the movement corresponds to the predefined movement.

Responsive to determining that the movement corresponds to a predefined movement, wearable 10 may select a second arrangement from the plurality arrangements based on the predefined movement (230). For example, UI module 20 may receive the indication of the predefined movement from motion detection module 22 any perform a look-up of the predefined movement at data store 26A to identify an arrangement, from the plurality of arrangements stored at data store 26A, that matches or is at least associated with the identified predefined movement. UI module 20 may select the associated arrangement as being an arrangement for which to display the visual stack of content cards.

Wearable 10 may display the visual stack of content cards in the second arrangement (240). For example, UI module 20 may cause UID 12 to alter the presentation of the visual stack of content cards 16. UID 12 may refrain from outputting or otherwise cease displaying the visual stack in arrangement 30A. UID 12 may replace the presentation of arrangement 30A with a presentation of arrangement 30B.

Techniques of the disclosure enable a wearable computing device to detect a wrist movement performed by the user, wherein the wrist movement causes the wearable computing device to display a home screen or fan out a stack of cards. Specifically, the wrist movement may include, while the wearable computing device is held up to the attention of the user, a first tiling motion of the user's wrist away from the body of the user followed by a second tiling motion of the user's wrist in the opposite direction towards the body of the user. The wearable computing device may determine that the two tilting motions have occurred based on one or more types of information such as accelerometer profile, gyro-meter (e.g., gyroscope) profile, camera, etc. To determine that the user has performed the wrist movement, the computing device may determine whether the first and second tilting motions have occurred in a defined period of time.

Responsive to determining that the wrist movement has been performed, the wearable computing device may perform one or more operations. For instance, the computing device may, if not presently outputting the home screen, return to the home screen. In another example, if the wearable computing device is outputting a stack of cards for display, responsive to determining the wrist movement has been performed, the computing device may "fan out" two or more of the cards in the stack. The fan out effect may display a portion of information of two or more of the cards for display contemporaneously in the user interface of the wearable computing device.

Therefore, whether to display the home screen or fan out a card stack may be dependent on the current state of the user interface. That is, if a card stack is presently displayed, the wrist movement may fan out the cards, while if a card stack is not displayed but the user interface is not displaying the home screen, the wrist movement may cause the wearable computing device to display the home screen. Other possible changes to the user interface based on the current state may also be possible when using the wrist movement.

In some examples, the wrist movement may cause the wearable computing device to iterate through each card in a card stack upon detecting each instance of the wrist movement. That is, detecting a first instance of the wrist movement may cause the wearable computing device to iterate to the next card in the stack. Detecting a second instance of the wrist movement may cause the wearable computing device to iterate to the next card in the stack.

Performing a reverse wrist movement (e.g., the second motion followed by the first motion of the wrist movement described above) may cause the wearable computing device to iterate through the cards in reverse, i.e., moving forward or backward through the card stack may be based on whether the movement is a wrist movement or reverse wrist movement. In some examples, a first wrist movement may fan-out the cards, while a subsequent movement may begin iterating through the next full card.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or may include communication media including any medium that facilitates transfer of a computer program from one place to another, e.g., according to a communication protocol. In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples have been described. These and other examples are within the scope of the following claims.

## Claims

1. A method comprising:
displaying (200), by a wearable computing device (10), a visual stack of content cards in a first arrangement (30A) from a plurality of arrangements, wherein the visual stack of content cards comprises several graphical elements overlaid on top of each other and the first arrangement comprises only information associated with the content card atop the visual stack being visible at a given time while information associated with the other content cards from the visual stack being visually obscured behind the top content card such that it is not visible at the display at the given time;
detecting (210), by a motion sensor (15) of the wearable computing device, movement of the wearable computing device; and
responsive to determining (220) that the movement of the wearable computing device corresponds to a predefined movement, selecting (230), by the wearable computing device, based on the predefined movement, a second arrangement from the plurality of arrangements, wherein the second arrangement is different from the first arrangement, wherein if the predefined movement is a specific change in direction, speed or rotation over a certain period in time, the second arrangement replaces the top content card with a next content card in the visual stack whereas if the predefined movement is a different movement the second arrangement fans out the visual stack by displaying at least a portion of the information from each of the other content cards beneath the information of a content card displayed atop the stack (30B); and
displaying (240), by the wearable computing device, the visual stack of content cards in the second arrangement.

2. The method of claim 1, wherein:
the movement of the wearable computing device is detected over a period of time, the movement has a first amount of change in direction during a first portion of the period of time, and
the movement has a second amount of change in direction during a second portion of the period of time, the second amount of change in direction being opposite the first amount of change in direction.

3. The method of claim 1 or 2, wherein:
the movement of the wearable computing device is detected over a period of time, the movement has a first amount of change in degree of tilt during a first portion of the period of time, and
the movement has a second amount of change in degree of tilt during a second portion of the period of time, the second amount of change in degree of tilt being opposite the first amount of change in degree of tilt.

4. The method of any of claims 1-3, wherein:
the movement of the wearable computing device is detected over a period of time, the movement has a first degree of rotation about an axis in a first direction during a first portion of the period of time, and
the movement has a second degree of rotation about the axis in a second direction during a second portion of the period of time, the second direction being opposite the first direction.

5. The method of any of claims 1-4, wherein:
the movement of the wearable computing device is detected over a period of time,
the movement indicates that the wearable device is in a first position at which the user is not likely able to view a display of the wearable computing device during a first portion of the period of time, and
the movement indicates that the wearable computing device is in a second position at which the user is likely able to view the display of the wearable computing device during a second portion of the period of time.

6. The method of any of claims 1-5, wherein the movement is first movement and the predefined movement is a first predefined movement, the method further comprising:
detecting, by the motion sensor of the wearable computing device, second movement of the wearable computing device;
responsive to determining that the second movement of the wearable computing device corresponds to a second predefined movement, selecting, by the wearable computing device, based on the second predefined movement, a third arrangement from the plurality of arrangements, wherein the third arrangement is different from the first and second arrangements; and
displaying, by the wearable computing device, the visual stack of content cards in the third arrangement.

7. The method of any of claims 1-6, wherein the predefined movement is a first predefined movement, the method further comprising, responsive to determining that the movement of the wearable computing device corresponds to a second predefined movement:
ceasing displaying, by the wearable computing device, the visual stack of content cards; and
displaying, by the wearable computing device, a home screen graphical user interface, the second predefined movement being different from the first predefined movement.

8. A wearable computing device (10) comprising:
a display device that displays a visual stack of content cards in at least a first arrangement (30A) and a second arrangement from a plurality of arrangements;
at least one motion sensor (15) that detects (210) movement of the wearable computing device and generates, based on the movement, motion data;
at least one processor (40); and
at least one module operable by the at least one processor to perform any of the methods of claims 1-7.

9. A computer-readable storage medium encoded with instructions for causing the wearable computing device of claim 8 to perform any of the methods recited by claims 1-7.

## Patentansprüche

1. Verfahren, umfassend:
Anzeigen (200), durch eine tragbare Rechenvorrichtung (10), eines visuellen Stapels von Kontentkarten in einer ersten Anordnung (30A) aus einer Mehrzahl von Anordnungen, wobei der visuelle Stapel von Kontentkarten mehrere graphische Elemente umfasst, die aufeinander überlagert sind, und wobei die erste Anordnung nur Information umfasst, die der Kontentkarte oben auf dem visuellen Stapel zugeordnet ist, die zu einem gegebenen Zeitpunkt sichtbar ist, während Information, die den anderen Kontentkarten aus dem visuellen Stapel zugeordnet ist, visuell hinter der oberen Kontentkarte verdeckt ist, so dass sie zu dem gegebenen Zeitpunkt nicht auf der Anzeige sichtbar ist;
Erfassen (210), durch einen Bewegungssensor (15) der tragbaren Rechenvorrichtung, einer Bewegung der tragbaren Rechenvorrichtung; und
in Antwort auf eine Bestimmung (220), dass die Bewegung der tragbaren Rechenvorrichtung einer vordefinierten Bewegung entspricht, Auswählen (230), durch die tragbare Rechenvorrichtung und basierend auf der vordefinierten Bewegung, einer zweiten Anordnung aus der Mehrzahl von Anordnungen, wobei die zweite Anordnung von der ersten Anordnung verschieden ist, wobei dann, wenn die vordefinierte Bewegung eine spezifische Änderung der Richtung, Geschwindigkeit oder Rotation über eine bestimmte Zeitdauer ist, die zweite Anordnung die obere Kontentkarte durch eine nächste Kontentkarte in dem visuellen Stapel ersetzt, wohingegen dann, wenn die vordefinierte Bewegung eine andere Bewegung ist, die zweite Anordnung den visuellen Stapel auffächert, indem wenigstens ein Bereich der Information von jeder der anderen Kontentkarten unter der Information einer Kontentkarte angezeigt wird, die oben auf dem Stapel (30B) angezeigt wird; und
Anzeigen (240), durch die tragbare Rechenvorrichtung, des visuellen Stapels von Kontentkarten in der zweiten Anordnung.

2. Verfahren nach Anspruch 1, wobei:
die Bewegung der tragbaren Rechenvorrichtung über eine Zeitdauer erfasst wird, die Bewegung einen ersten Betrag einer Richtungsänderung während eines ersten Bereichs der Zeitdauer hat, und
die Bewegung einen zweiten Betrag der Richtungsänderung während eines zweiten Bereichs der Zeitdauer hat, wobei der zweite Betrag der Richtungsänderung dem ersten Betrag der Richtungsänderung entgegengesetzt ist.

3. Verfahren nach Anspruch 1 oder 2, wobei:
die Bewegung der tragbaren Rechenvorrichtung über eine Zeitdauer erfasst wird, die Bewegung einen ersten Betrag einer Änderung eines Neigungswinkels während eines ersten Bereichs der Zeitdauer hat, und
die Bewegung einen zweiten Betrag einer Änderung des Neigungswinkels während eines zweiten Bereichs der Zeitdauer hat, wobei der zweite Betrag der Änderung des Neigungswinkels entgegengesetzt zum ersten Betrag der Änderung des Neigungswinkels ist.

4. Verfahren nach einem der Ansprüche 1 bis 3, wobei:
die Bewegung der tragbaren Rechenvorrichtung über eine Zeitdauer erfasst wird, wobei die Bewegung einen ersten Grad einer Rotation um eine Achse in einer ersten Richtung während eines ersten Bereichs der Zeitdauer hat, und
die Bewegung einen zweiten Grad der Rotation um die Achse in einer zweiten Richtung während eines zweiten Bereichs der Zeitdauer hat, wobei die zweite Richtung entgegengesetzt zur ersten Richtung ist.

5. Verfahren nach einem der Ansprüche 1 bis 4, wobei:
die Bewegung der tragbaren Rechenvorrichtung über eine Zeitdauer erfasst wird,
wobei die Bewegung angibt, dass die tragbare Vorrichtung in einer ersten Position ist, in der der Benutzer wahrscheinlich nicht in der Lage ist, eine Anzeige der tragbaren Rechenvorrichtung während eines ersten Bereichs der Zeitdauer zu sehen,und
die Bewegung angibt, dass die tragbare Rechenvorrichtung in einer zweiten Position ist, in der der Benutzer wahrscheinlich in der Lage ist, die Anzeige der tragbaren Rechenvorrichtung während eines zweiten Bereichs der Zeitdauer zu sehen.

6. Verfahren nach einem der Ansprüche 1 bis 5, wobei die Bewegung eine erste Bewegung ist, und die vordefinierte Bewegung eine erste vordefinierte Bewegung ist, wobei das Verfahren ferner umfasst:
Erfassen, durch den Bewegungssensor der tragbaren Rechenvorrichtung, einer zweiten Bewegung der tragbaren Rechenvorrichtung;
in Antwort auf eine Bestimmung, dass die zweite Bewegung der tragbaren Rechenvorrichtung einer zweiten vordefinierte Bewegung entspricht, Auswählen, durch die tragbare Rechenvorrichtung und basierend auf der zweiten vordefinierten Bewegung, einer dritten Anordnung aus der Mehrzahl von Anordnungen, wobei die dritte Anordnung von der ersten und der zweiten Anordnung verschieden ist; und
Anzeigen, durch die tragbare Rechenvorrichtung, des visuellen Stapels von Kontentkarten in der dritten Anordnung.

7. Verfahren nach einem der Ansprüche 1 bis 6, wobei die vordefinierte Bewegung eine erste vordefinierte Bewegung ist, wobei das Verfahren ferner Folgendes in Antwort auf eine Bestimmung umfasst, dass die Bewegung der tragbaren Rechenvorrichtung einer zweiten vordefinierten Bewegung entspricht:
Beenden des Anzeigens des visuellen Stapels von Kontentkarten durch die tragbare Rechenvorrichtung; und
Anzeigen, durch die tragbare Rechenvorrichtung, einer graphischen Homescreen-Benutzerschnittstelle, wobei die zweite vordefinierte Bewegung von der ersten vordefinierten Bewegung verschieden ist.

8. Tragbare Rechenvorrichtung (10), umfassend:
eine Anzeigevorrichtung, die einen visuellen Stapel von Kontentkarten wenigstens in einer ersten Anordnung (30A) und einer zweiten Anordnung aus einer Mehrzahl von Anordnungen anzeigt;
wenigstens einen Bewegungssensor (15), der eine Bewegung der tragbaren Rechenvorrichtung erfasst (210), und basierend auf der Bewegung Bewegungsdaten generiert;
wenigstens einen Prozessor (40); und
wenigstens ein Modul, das durch den wenigstens einen Prozessor dazu betreibbar ist, eines der Verfahren nach den Ansprüchen 1 bis 7 durchzuführen.

9. Computerlesbares Speichermedium, das mit Befehlen kodiert ist, um die tragbare Rechenvorrichtung nach Anspruch 8 zu veranlassen, eines der Verfahren nach den Ansprüchen 1 bis 7 auszuführen.

## Revendications

1. Procédé comprenant :
l'affichage (200), par un dispositif informatique portable (10), d'un empilement visuel de cartes de contenu dans un premier agencement (30A) parmi une pluralité d'agencements, où l'empilement visuel de cartes de contenu comprend de nombreux éléments graphiques superposés les uns au-dessus des autres et le premier agencement comprend uniquement une information associée avec la carte de contenu du dessus de l'empilement visuel étant visible à un temps donné tandis que l'information associée avec les autres cartes de contenu de l'empilement visuel étant visuellement obscurcie derrière la carte de contenu du dessus de sorte qu'elle n'est pas visible au niveau de l'affichage au temps donné ;
la détection (210), par un capteur de mouvement (15) du dispositif informatique portable, d'un mouvement du dispositif informatique portable ; et
en réponse à la détermination (220) que le mouvement du dispositif informatique portable correspond à un mouvement prédéfini, la sélection (230), par le dispositif informatique portable, sur la base du mouvement prédéfini, d'un deuxième agencement parmi la pluralité d'agencements, où le deuxième agencement est différent du premier agencement, où, si le mouvement prédéfini est un changement spécifique dans la direction, une vitesse ou une rotation pendant un certain laps de temps, le deuxième agencement remplace la carte de contenu du dessus avec une carte de contenu suivante dans l'empilement visuel, alors que si le mouvement prédéfini est un mouvement différent, le deuxième agencement ouvre en éventail l'empilement visuel en affichant au moins une partie de l'information de chacune des autres cartes de contenu à côté de l'information d'une carte de contenu affichée au-dessus de la pile (30B) ; et
l'affichage (240), par le dispositif informatique portable, de l'empilement visuel de cartes de contenu dans le deuxième agencement.

2. Procédé selon la revendication 1, dans lequel :
le mouvement du dispositif informatique portable est détecté sur un laps de temps, le mouvement a une première amplitude de changement dans la direction durant une première partie du laps de temps, et
le mouvement a une deuxième amplitude de changement dans la direction durant une deuxième partie du laps de temps, la deuxième amplitude de changement dans la direction étant opposée à la première amplitude de changement dans la direction.

3. Procédé selon la revendication 1 ou 2, dans lequel :
le mouvement du dispositif informatique portable est détecté pendant un laps de temps, le mouvement a une première amplitude de changement dans le degré d'inclinaison durant une première partie du laps de temps, et
le mouvement a une deuxième amplitude de changement dans le degré d'inclinaison durant une deuxième partie du laps de temps, la deuxième amplitude de changement dans le degré d'inclinaison étant opposée à la première amplitude de changement dans le degré d'inclinaison.

4. Procédé selon l'une quelconque des revendications 1 à 3, dans lequel :
le mouvement du dispositif informatique portable est détecté pendant un laps de temps, le mouvement a un premier degré de rotation autour d'un axe dans une première direction durant une première partie du laps de temps, et
le mouvement a un deuxième degré de rotation autour de l'axe dans une deuxième direction durant une deuxième partie du laps de temps, la deuxième direction étant opposée à la première direction.

5. Procédé selon l'une quelconque des revendications 1 à 4, dans lequel :
le mouvement du dispositif informatique portable est détecté sur un laps de temps,
le mouvement indique que le dispositif portable est dans une première position à laquelle l'utilisateur n'est pas susceptible de visualiser un affichage du dispositif informatique portable durant une première partie du laps de temps, et
le mouvement indique que le dispositif informatique portable est dans une deuxième position à laquelle l'utilisateur est susceptible de visualiser l'affichage du dispositif informatique portable durant une deuxième partie du laps de temps.

6. Procédé selon l'une quelconque des revendications 1 à 5, dans lequel le mouvement est un premier mouvement et le mouvement prédéfini est un premier mouvement prédéfini, le procédé comprenant en outre :
la détection, par le capteur de mouvement du dispositif informatique portable, d'un deuxième mouvement du dispositif informatique portable ;
en réponse à la détermination que le deuxième mouvement du dispositif informatique portable correspond à un deuxième mouvement prédéfini, la sélection, par le dispositif informatique portable, sur la base du deuxième mouvement prédéfini, d'un troisième agencement parmi la pluralité d'agencements, où le troisième agencement est différent des premier et deuxième agencements ; et
l'affichage, par le dispositif informatique portable, de l'empilement visuel de cartes de contenu dans le troisième agencement.

7. Procédé selon l'une quelconque des revendications 1 à 6, dans lequel le mouvement prédéfini est un premier mouvement prédéfini, le procédé comprenant en outre, en réponse à la détermination que le mouvement du dispositif informatique portable correspond à un deuxième mouvement prédéfini :
la fin de l'affichage, par le dispositif informatique portable, de l'empilement visuel de cartes de contenu ; et
l'affichage, par le dispositif informatique portable, d'une interface utilisateur graphique d'écran d'accueil, le deuxième mouvement prédéfini étant différent du premier mouvement prédéfini.

8. Dispositif informatique portable (10), comprenant :
un dispositif d'affichage qui affiche un empilement visuel de cartes de contenu dans au moins un premier agencement (30A) et un deuxième agencement parmi une pluralité d'agencements ;
au moins un capteur de mouvement (15) qui détecte (210) un mouvement du dispositif informatique portable et génère, sur la base du mouvement, des données de mouvement ;
au moins un processeur (40) ; et
au moins un module exploitable par l'au moins un processeur pour exécuter l'un quelconque des procédés selon les revendications 1 à 7.

9. Support de stockage lisible par ordinateur encodé avec des instructions pour faire en sorte que le dispositif informatique portable selon la revendication 8 exécute l'un quelconque des procédés selon les revendications 1 à 7 .
